# EUROPEAN PATENT SPECIFICATION

(11) **EP 1 635 265 B1**
(45) Date of publication and mention of the grant of the patent: **27.08.2008**
(21) Application number: 05110883.5
(22) Date of filing: 21.06.2005
(51) Int. Cl.: G06F 12/14, G11B 20/00, H04Q 7/32

(54) **System for downloading, encrypting based on user biometric data and storing contents data, method and mobile communications terminal used for the same**
System zum Herunterladen, Verschlüsseln mittels biometrischer Nutzerdaten und Speichern von Inhaltsdaten, Verfahren und dafür verwendetes mobiles Kommunikationsendgerät
Système pour télécharger, chiffrer à base des données biométriques d'utilisateur et mémoriser des données contenues, procédé et terminal mobile de communications utilisé à cet effet

(30) Priority: 23.06.2004 JP 184370
(43) Date of publication of application: 15.03.2006
(62) Divisional of application: 05105452.6
(73) Proprietor: NEC CORPORATION, Tokyo (JP)
(72) Inventor: Yamamoto, Hikaru, Tokyo (JP)
(74) Representative: Betten & Resch

(56) References cited:
- EP-A- 1 519 286
- US-A1- 2001 052 077
- US-A1- 2003 007 640

## Description

### BACKGROUND OF THE INVENTION

### Field of the Invention

The present invention relates to a contents data utilization system and method, and a mobile communication terminal used for the same, and more particularly to a contents data utilization system in which the contents data is downloaded from a contents server to the mobile communication terminal via a radio network and to be utilized.

### Description of the Prior Art

As an example of such contents data utilization system, a technique is disclosed in Japanese Patent Application Laid-Open No. 2003-110541 (patent document 1). This technique will be described below. When a contents acquisition request including a subscriber number are transmitted from a mobile communication terminal to a contents server (hereinafter simply referred to as a server), the server generates a cipher key of contents based on the received subscriber number, and encodes the contents data with this key. And the encoded contents data is downloaded to the mobile communication terminal, together with the cipher key.

At the mobile communication terminal, the encoded contents data and the cipher key are received, and associatively stored in memory. Thereafter, at the mobile communication terminal, to utilize the contents, the contents data is decoded using the cipher key. US-A-2003/0007640 relates to a system for distributing and playing back digital work over a network. WO 2004/003806 relates to a content providing technique involving user authentication.

### BRIEF SUMMARY OP THE INVENTION

With the above technique as disclosed in patent document 1, at the mobile communication terminal, the contents encoded by the cipher key based on the subscriber number and the cipher key are associated and stored in an internal memory or an external storage.

Accordingly, when the contents owned by the person himself who purchased the fee-charging contents data are desired to be shared between a plurality of mobile communication terminals, the external memory may be employed to share the contents. However, when the external memory storing the fee-charging contents data is lost, the contents data may be decoded and reproduced due to insufficient secrecy, going against the copyright protection, because this external, memory associatively stores the cipher key and the contents data encrypted by the cipher key.

Also, since besides the encoded contents data, the cipher key is downloaded from the contents server to the mobile communication terminal, there is a drawback that the communication time and communication fee are correspondingly increased to impose a more burden on the user, Also, when the same user wants to share the contents between a plurality of mobile communication terminals, there is a drawback that the contents can not be shared; because the subscriber number is different for every terminal.

It is an object of the present invention to provide a contents data utilization system and method, and a mobile communication terminal, in which the contents data is shared between a plurality of mobile communication terminals while the copyright is protected.

The present invention provides a contents data utilization system according to independent claim 1 for downloading contents data via a communication network to store the contents data into an external memory of a mobile communication terminal, wherein the mobile communication terminal comprises means for generating a cipher key based on biological information capable of identifying the user of the terminal in response to a download command, and means for encoding the contents data with the cipher key and storing the encoded data into the external memory.

Also, the invention provides a contents data utilization method according to independent claim 5 for downloading contents data via a communication network to store the contents data into an external memory of a mobile communication terminal.

Also, the invention provides a mobile communication terminal according to independent claim 9.

Also, the invention provides a program according to independent claim 13.

Various improvements to the invention are recited in the dependent claims.

In the following, the passages regarding generating a cipher key for encoding content data at a mobile communication terminal by using an identifier intrinsic to a user of the terminal and stored in a card removably inserted in the terminal do not form part of the invention but provide useful teachings for understanding the invention.

### BRIEF DESCRIPTION OF THE DRAWINGS

FIG. 1 is a system concept diagram of the present invention;
FIG. 2 is a functional block diagram of a mobile communication terminal according to an embodiment of the invention;
FIG. 3 is a flowchart showing an operation of storing the contents according to the embodiment of the invention;
FIG. 4 is a flowchart showing an operation of reproducing the contents according to the embodiment of the invention; and
FIG. 5 is a flowchart showing another operation of reproducing the contents according to the embodiment of the invention.

### DETAILED DESCRIPTION OF THE PREFERRED EMBODIMENTS

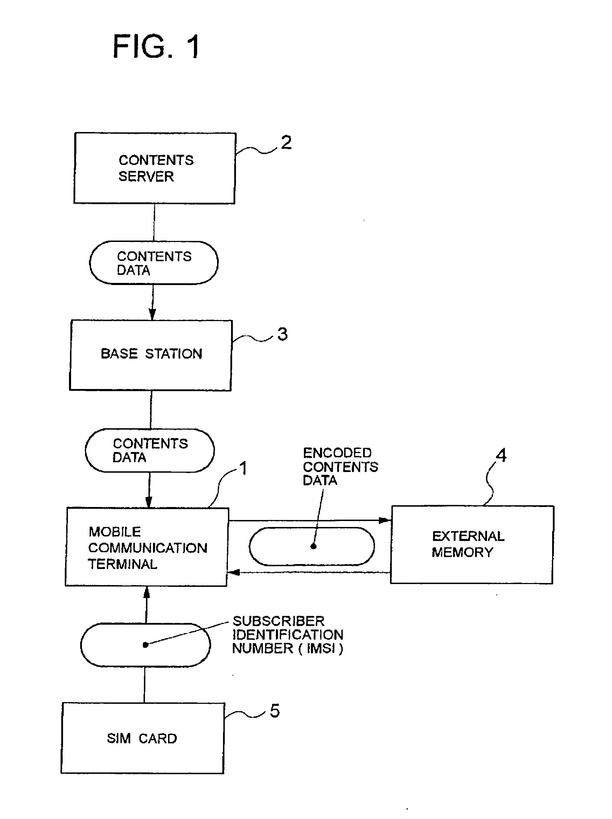

The present invention will be described below with reference to the drawings. FIG. 1 is a block diagram showing a system configuration of the invention. In FIG. 1, a mobile communication terminal 1 receives the contents data from a contents server 2 via a base station 3. At this time, the mobile communication terminal 1 encodes the received contents data and stores the encoded data in an external memory 4, in which a cipher key may be created based on an IMSI (International Mobile Subscriber Identity) that is a subscriber identification number read from a removable SIM (Subscriber Identity Module) card 5 inserted into the mobile communication terminal 1. Accordingly, this cipher key is intrinsic to the IMSI.

The contents data stored in the external memory 4 is decoded in the mobile communication terminal 1. That is, the decoding is made by regenerating the cipher key, which is generated in encoding, by utilizing the subscriber identification number (IMSI) read from the SIM card 5 inserted into the mobile communication terminal 1. The reproduction of the contents data at the mobile communication terminal 1 is allowed only when the cipher key in encoding is matched with the cipher key generated for decoding.

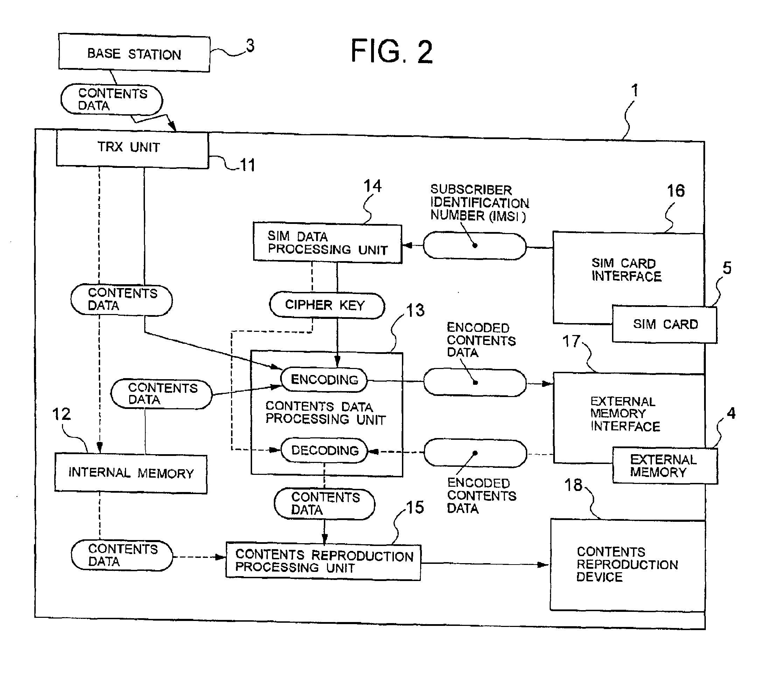

FIG. 2 is a functional block diagram of the mobile communication terminal 1 of PIG. 1. In FIG. 2, a *TRX* (transmitting and receiving) unit 11 receives the contents data from the server 1 via the base station 3 (see FIG. 1). The received contents data is supplied to a contents data processing unit 13. At this time, an SIM data processing unit 14 reads the subscriber identification number (IMSI) from the SIM card 5 inserted into an SIM card interface IS. The SIM data processing unit 14 converts the read subscriber identification number into a cipher key for encoding the contents data, and transmits it to the contents data processing unit 13. This cipher key is an intrinsic value to the subscriber identification number (IMSI).

The contents data processing unit 13 encodes the contents data for the mobile communication terminal 1, using the received contents data and the cipher key, transfers the encoded data to the external memory 4 inserted into an external memory interface 17, and stores it therein. Of course, the contents data once stored in an internal memory 12 may be also stored in the external memory 4. In this case, after completion of transferring the contents data to the external memory 4, it is assumed that the contents data stored in the internal memory 12 is immediately deleted.

Upon utilization of the contents data, the contents data stored in the external memory 4 is transferred to the contents data processing unit 13. At this time, the SIM data processing unit 14 reads the subscriber identification number (IMSI) from the SIM card 5 inserted into the SIM card interface 16. The SIM data processing unit 14 regenerates the cipher key in encoding the contents data from the read subscriber identification number and transmits it to the contents data processing unit 13. The contents data processing unit 13 decodes the contents data for the mobile communication terminal 1, using the received contents data and the cipher key, and transfers it to a contents reproduction processing unit 15. The contents reproduction processing unit 15 reproduces the contents data by driving a contents reproduction device 18 such as an LCD and/or a speaker.

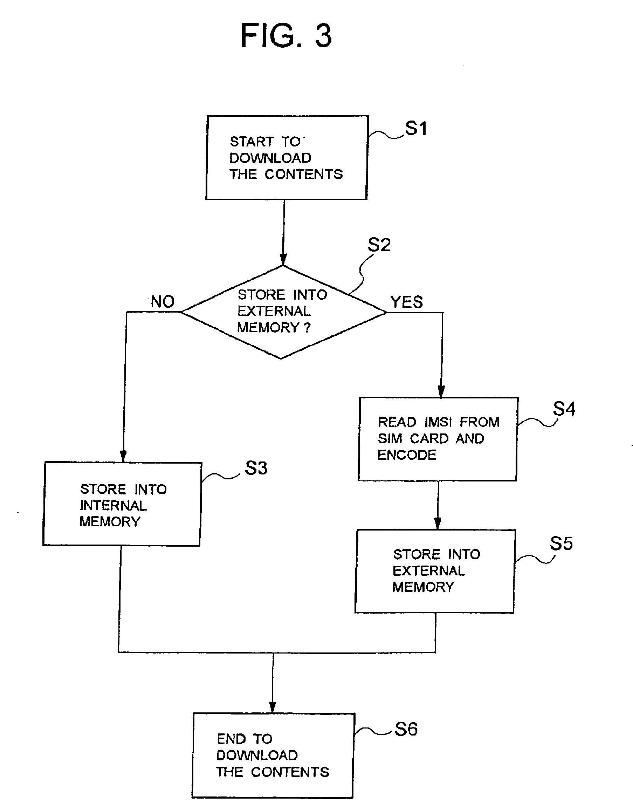

FIG. 3 is a flowchart showing an operation of downloading the data according to one embodiment of the invention. If the mobile communication terminal starts to download the contents data (step S1), the user is prompted to select a storing destination of downloaded data. If the storing destination is designated as the internal memory by a key operation of the user ("No" at step S2), the data is not encoded but stored in the internal memory (step S3).

At step S2, if the storing destination is designated as the external memory, the subscriber identification number (IMSI) is read from the SIM card 5, the cipher key is generated, and the contents data is encoded using this cipher key (step S4). Then, the encoded data is stored in the external memory 4 (step S5). Thus, download of the contents is completed (step S6).

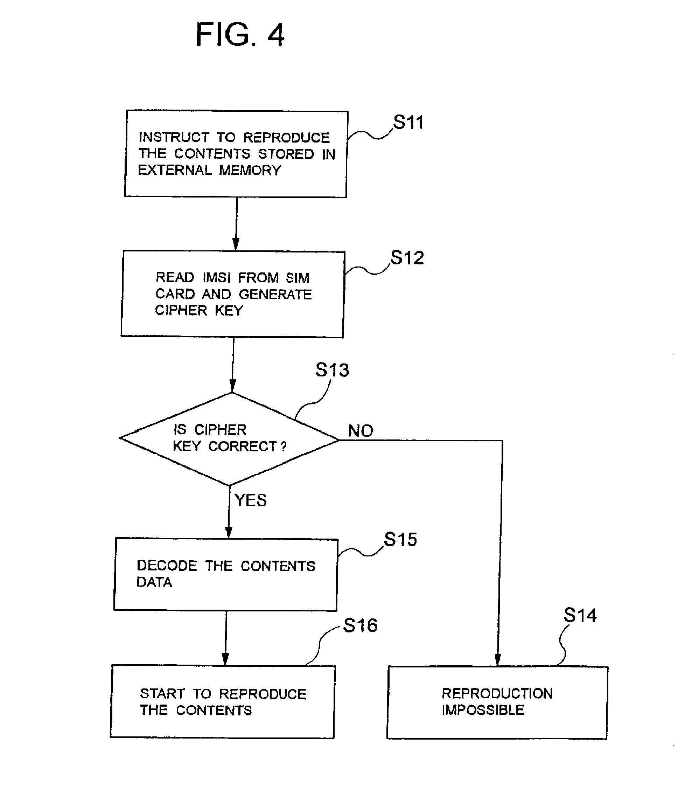

FIG. 4 is a flowchart showing an operation of reproducing the data according to the embodiment of the invention. If the user instructs the mobile communication terminal 1 to reproduce the contents data stored in the external memory 4 (step S11), a cipher key is generated by reading the subscriber identification number (IMSI) from the SIM card 5 (step S12), and the data is decoded using the cipher key. At this time, if the cipher key is judged to be incorrect ("No" at step S13), data is not reproduced (step S14). If the cipher key is correct at step S13, the contents data is decoded using the cipher key (step S15), and the reproduction is started (step S16).

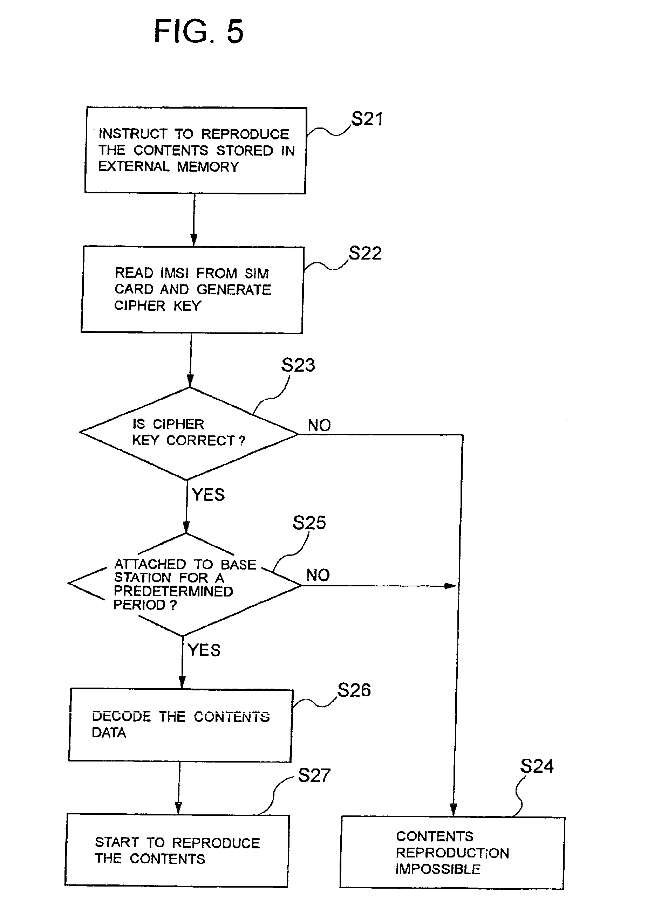

FIG. 5 is a flowchart showing an operation of reproducing the data according to another embodiment of the invention. If the user instructs the mobile communication terminal 1 to reproduce the contents data stored in the external memory 4 (step S21), a cipher key is generated by reading the subscriber identification number (IMSI) from the SIM card 5 (step S22). If the cipher key is incorrect ("No" at step S23), the contents data is not reproduced (step S24). If the cipher key is correct at step S23, an attaching history indicating whether or not the mobile communication terminal 1 attaches (connects) to the base station 3 for a predetermined (preset) period, is checked (step S25).

It is supposed that this attaching history is stored via the TRX11 in the internal memory 12. If there is no record in which the mobile communication terminal 1 is attached to the base station 3 for the predetermined period, the contents data is not reproduced (step S24). At step S25, if there is any attaching record for the predetermined period, the contents data is decoded using the generated cipher key (step S26), and reproduction of the contents is started (step S27). At this time, a determination whether or not there is attaching record is performed in the contents data processing unit 13.

In this way, the attaching history to the base station 3 for the predetermined period is checked, and a determination whether or not the contents are reproduced is made according to the checked result, whereby the users for utilizing the contents are only limited to those of the mobile communication terminal 1. Since a determination whether or not the contents are utilized is made only based on the subscriber identification number (IMSI) and the attaching history, the base station or server is subject to no excess load.

In this embodiment, in the case where the external memory and the SIM card are passed to another mobile communication terminal, it is required that the battery is dismounted when replacing the SIM card, and the power is turned on again. Since the mobile communication terminal is necessarily attached to the base station when turning on the power, the attaching history is created instantly, and stored in the internal memory, as far as the mobile communication terminal is within a communication area of the base station. Therefore, the contents can be shared with other mobile communication terminals.

According to the invention, the cipher key is generated using the fingerprint intrinsic to the user, instead of the cipher key based on the IMSI in the previous example. That is, the information of the fingerprint is converted into digital data, and in accordance with a predetermined cipher key generation algorithm, the cipher key is generated based on this digital data. The SIM card interface 16 of FIG. 2 is a fingerprint reading unit, and the SIM data processing unit 14 of FIG. 2 is a cipher key generation unit with the cipher key generation algorithm.

In this way, the personal use of the contents data is limited, as far as the same user and the same cipher key generation algorithm are involved, whereby the contents can be shared between a plurality of mobile communication terminals while the copyright is protected. It is apparent that not only the fingerprint but also the biological (living organism) information capable of identifying the person can be employed. Also, it is apparent that in each of the above embodiments the operation procedure may be stored in advance as a program in the ROM, and read and executed by the CPU (computer).

According to the invention, since the contents data is encoded using the subscriber identification number (IMSI), the contents can be shared between a plurality of mobile communication terminals while the copyright is protected, giving rise to the effect that there is less possibility that the contents are employed without permission by others when stolen or lost.

Also, according to the invention, since the contents data is stored in the external memory, large amounts of data can be stored by exchanging the external memory, giving rise to the effect that the contents can be easily backed up against failure, loss or theft.

An embodiment of the present invention may be summarized as providing a contents data utilization system in which the contents data is shared between a plurality of mobile communication terminals while the copyright is protected. When the contents data downloaded via a communication network is stored into an external memory of a mobile communication terminal, an SIM data processing unit generates a cipher key, using an IMSI that is an identifier stored in an SIM card inserted into the terminal 1. Using the cipher key, a contents data processing unit encodes the downloaded contents data, and stores it into an external memory. When the contents data is reproduced, the SIM data processing unit generates a cipher key, using the identifier stored in the SIM card, and decodes and reproduces the contents data stored in the external memory. Thereby, the contents data can be shared between a plurality of mobile communication terminals owned by the user having the SIM card.

## Claims

1. A contents data utilization system for downloading contents data via a communication network to store the contents data into an external memory (4) of a mobile communication terminal (1), wherein said mobile communication terminal (1) comprises:
means (14) for generating a first cipher key based on biological information capable of identifying a user of said terminal (1) in response to a download command;
means (13) for encoding said contents data with said first cipher key and storing the encoded data into said external memory (4);
means (14) for generating a second cipher key based on said biological information in response to a contents reproduction command; and
means (13) for decoding said contents data stored in said external memory (4) using said second cipher key;
**characterized in that**
said mobile communication terminal (1) further comprises:
means for storing an attaching history indicating whether or not the mobile communication terminal (1) connects to said communication network; and
means for reproducing (15) said contents data in accordance with said attaching history in response to said contents reproduction command.

2. The contents data utilization system according to claim 1, wherein said attaching history indicates whether or not the mobile communication terminal (4) connects to said communication network for a predetermined period.

3. The contents data utilization system according to claim 1 or claim 2, said mobile communication terminal (1) further comprising an internal memory (12) for storing the attaching history.

4. The contents data utilization system according to any one of claims 1 to 3, wherein said mobile communication terminal (1) further comprising an internal memory (12) for storing the downloaded contents data, and further comprising means for deleting the contents data stored in the internal memory (12) after the contents data is encoded and stored into the external memory (4).

5. A contents data utilization method of downloading contents data via a communication network to store the contents data into an external memory (4) of a mobile communication terminal (1), comprising: at said mobile communication terminal (1),
a step of generating (S4) a first cipher key based on biological information capable of identifying a user of said terminal (1) in response to a download command;
a step of encoding said contents data with said first cipher key and storing (S5) the encoded data into said external memory (4);
a step of generating (S12, S22) a second cipher key based on said biological information in response to a contents reproduction command; and
a step of decoding (S15, S26) said contents data stored in said external memory (4) using said second cipher key;
**characterized in that**
said method further comprises, at said mobile communication terminal (1),
a step of storing an attaching history indicating whether or not the mobile communication terminal (1) connects to said communication network; and
a step of reproducing (S16, S27) said contents data in accordance with said attaching history in response to said contents reproduction command.

6. The contents data utilization method according to claim 5, wherein said attaching history indicates (S25) whether or not the mobile communication terminal (4) connects to said communication network for a predetermined period.

7. The contents data utilization method according to claim 5 or claim 6, further comprising a step of storing the attached history in an internal memory (12) of the mobile communication terminal (1).

8. The contents data utilization method according to any one of claims 5 to 7, further comprising a step of storing the downloaded contents data in an internal memory (12) of the mobile communication terminal, and a step of deleting the contents date stored in the internal memory (12) after the contents data is encoded and stored into the external memory (4).

9. A mobile communication terminal (1) for downloading contents data via a communication network to store the contents data into an external memory (4) thereof, comprising:
means (13) for generating a first cipher key based on biological information capable of identifying a user of said terminal (1) in response to a download command; and
means (14) for encoding said contents data with said first cipher key and storing the encoded data into said external memory (4);
means (13) for generating a second cipher key based on said biological information in response to a contents reproduction command; and
means (14) for decoding said contents data stored in said external memory (4) using said second cipher key;
**characterized in that**
said mobile communication terminal (1) further comprises,
means for storing an attaching history indicating whether or not the mobile communication terminal (1) connects to said communication network; and
means (15) for reproducing said contents data in accordance with said attaching history in response to said contents reproduction command.

10. The mobile communication terminal (1) according to claim 9, wherein said attaching history indicates whether or not the mobile communication terminal (1) connects to said communication network for a predetermined period.

11. The mobile communication terminal (1) according to claim 9 or claim 10, further comprising an internal memory (12) for storing the attached history.

12. The mobile communication terminal (1) according to any one of claims 9 to 11, further comprising an internal memory (12) for storing the downloaded contents data, and further comprising means for deleting the contents data stored in the internal memory (12) after the contents data is encoded and stored into the external memory (4).

13. A program having code means for causing a computer when executing the program to perform the steps of the method according to any one of claims 5 to 8.

## Patentansprüche

1. Inhaltsdaten-Nutzungssystem zum Herunterladen von Inhaltsdaten über ein Kommunikationsnetz, um die Inhaltsdaten in einem externen Speicher (4) eines mobilen Kommunikationsendgeräts (1) zu speichern, wobei das mobile Kommunikationsendgerät (1) umfasst:
eine Einrichtung (14) zum Erzeugen eines ersten Chiffrierschlüssels anhand biologischer Informationen, die einen Anwender des Endgeräts (1) identifizieren können, in Reaktion auf einen Herunterladebefehl;
eine Einrichtung (13) zum Codieren der Inhaltsdaten mit dem ersten Chiffrierschlüssel und zum Speichern der codierten Daten in dem externen Speicher (4);
eine Einrichtung (14) zum Erzeugen eines zweiten Chiffrierschlüssels anhand der biologischen Informationen in Reaktion auf einen Inhaltswiedergabebefehl; und
eine Einrichtung (13) zum Decodieren der in dem externen Speicher (4) gespeicherten Inhaltsdaten unter Verwendung des zweiten Chiffrierschlüssels;
**dadurch gekennzeichnet, dass**
das mobile Kommunikationsendgerät (1) ferner umfasst:
eine Einrichtung zum Speichern einer Verbindungshistorie, die angibt, ob das mobile Kommunikationsendgerät (1) mit dem Kommunikationsnetz verbunden ist; und
eine Einrichtung (15) zum Wiedergeben der Inhaltsdaten in Übereinstimmung mit der Verbindungshistorie in Reaktion auf den Inhaltswiedergabebefehl.

2. Inhaltsdaten-Nutzungssystem nach Anspruch 1, wobei die Verbindungshistorie angibt, ob das mobile Kommunikationsendgerät (4) für eine vorgegebene Dauer mit dem Kommunikationsnetz verbunden ist.

3. Inhaltsdaten-Nutzungssystem nach Anspruch 1 oder Anspruch 2, wobei das mobile Kommunikationsendgerät (1) ferner einen internen Speicher (12) zum Speichern der Verbindungshistorie umfasst.

4. Inhaltsdaten-Nutzungssystem nach einem der Ansprüche 1 bis 3, wobei das mobile Kommunikationsendgerät (1) ferner einen internen Speicher (12) zum Speichern der heruntergeladenen Inhaltsdaten und ferner eine Einrichtung zum Löschen der in dem internen Speicher (12) gespeicherten Inhaltsdaten nach dem Codieren und Speichern der Inhaltsdaten in dem externen Speicher (4) umfasst.

5. Inhaltsdaten-Nutzungsverfahren zum Herunterladen von Inhaltsdaten über ein Kommunikationsnetz, um die Inhaltsdaten in einem externen Speicher (4) eines mobilen Kommunikationsendgeräts (1) zu speichern, wobei das Verfahren in dem mobilen Kommunikationsendgerät (1) umfasst:
einen Schritt des Erzeugens (S4) eines ersten Chiffrierschlüssels anhand biologischer Informationen, die einen Anwender des Endgeräts (1) identifizieren können, in Reaktion auf einen Herunterladebefehl;
einen Schritt des Codierens der Inhaltsdaten mit dem ersten Chiffrierschlüssel und des Speicherns (S5) der codierten Daten in dem externen Speicher (4);
einen Schritt des Erzeugens (S12, S22) eines zweiten Chiffrierschlüssels anhand der biologischen Informationen in Reaktion auf einen Inhaltswiedergabebefehl; und
einen Schritt des Decodierens (S15, S26) der in dem externen Speicher (4) gespeicherten Inhaltsdaten unter Verwendung des zweiten Chiffrierschlüssels;
**dadurch gekennzeichnet, dass**
das Verfahren in dem mobilen Kommunikationsendgerät (1) ferner umfasst:
einen Schritt des Speicherns einer Verbindungshistorie, die angibt, ob das mobile Kommunikationsendgerät (1) mit dem Kommunikationsnetz verbunden ist; und
einen Schritt des Wiedergebens (S16, S27) der Inhaltsdaten in Übereinstimmung mit der Verbindungshistorie in Reaktion auf den Inhaltswiedergabebefehl.

6. Inhaltsdaten-Nutzungsverfahren nach Anspruch 5, wobei die Verbindungshistorie angibt (S25), ob das mobile Kommunikationsendgerät (4) für eine vorgegebene Dauer mit dem Kommunikationsnetz verbunden ist.

7. Inhaltsdaten-Nutzungsverfahren nach Anspruch 5 oder Anspruch 6, das ferner einen Schritt des Speicherns der Verbindungshistorie in einem internen Speicher (12) des mobilen Kommunikationsendgeräts (1) umfasst.

8. Inhaltsdaten-Nutzungsverfahren nach einem der Ansprüche 5 bis 7, das ferner einen Schritt des Speicherns der heruntergeladenen Inhaltsdaten in einem internen Speicher (12) des mobilen Kommunikationsendgeräts und einen Schritt des Löschens der in dem internen Speicher (12) gespeicherten Inhaltsdaten nach dem Codieren und Speichern der Inhaltsdaten in dem externen Speicher (4) umfasst.

9. Mobiles Kommunikationsendgerät (1) zum Herunterladen von Inhaltsdaten über ein Kommunikationsnetz, um die Inhaltsdaten in einem externen Speicher (4) hiervon zu speichern, das umfasst:
eine Einrichtung (13) zum Erzeugen eines ersten Chiffrierschlüssels anhand biologischer Informationen, die einen Anwender des Endgeräts (1) identifizieren können, in Reaktion auf einen Herunterladebefehl; und
eine Einrichtung (14) zum Codieren der Inhaltsdaten mit dem ersten Chiffrierschlüssel und zum Speichern der codierten Daten in dem externen Speicher (4);
eine Einrichtung (13) zum Erzeugen eines zweiten Chiffrierschlüssels anhand der biologischen Informationen in Reaktion auf einen Inhaltswiedergabebefehl; und
eine Einrichtung (14) zum Decodieren der in dem externen Speicher (4) gespeicherten Inhaltsdaten unter Verwendung des zweiten Chiffrierschlüssels;
**dadurch gekennzeichnet, dass**
das mobile Kommunikationsendgerät (1) ferner umfasst:
eine Einrichtung zum Speichern einer Verbindungshistorie, die angibt, ob das mobile Kommunikationsendgerät (1) mit dem Kommunikationsnetz verbunden ist; und
eine Einrichtung (15) zum Wiedergeben der Inhaltsdaten in Übereinstimmung mit der Verbindungshistorie in Reaktion auf den Inhaltswiedergabebefehl.

10. Mobiles Kommunikationsendgerät (1) nach Anspruch 9, wobei die Verbindungshistorie angibt, ob das mobile Kommunikationsendgerät (1) für eine vorgegebene Dauer mit dem Kommunikationsnetz verbunden ist.

11. Mobiles Kommunikationsendgerät (1) nach Anspruch 9 oder Anspruch 10, das ferner einen internen Speicher (12) zum Speichern der Verbindungshistorie umfasst.

12. Mobiles Kommunikationsendgerät (1) nach einem der Ansprüche 9 bis 11, das ferner einen internen Speicher (12) zum Speichern der heruntergeladenen Inhaltsdaten und ferner eine Einrichtung zum Löschen der in dem internen Speicher (12) gespeicherten Inhaltsdaten nach dem Codieren und Speichern der Inhaltsdaten in dem externen Speicher (4) umfasst.

13. Programm, das Codemittel enthält, um einen Computer dann, wenn er das Programm ausführt, dazu zu veranlassen, die Schritte des Verfahrens nach einem der Ansprüche 5 bis 8 auszuführen.

## Revendications

1. Système d'utilisation de données de contenus permettant de télécharger des données de contenus via un réseau de communication afin de stocker les données de contenus dans une mémoire externe (4) d'un terminal de communication mobile (1), dans lequel ledit terminal de communication mobile (1) comprend :
des moyens (14) pour générer une première clé de chiffrement sur la base d'informations biologiques capables d'identifier un utilisateur dudit terminal (1) en réponse à une commande de téléchargement ;
des moyens (13) pour coder lesdites données de contenu avec ladite première clé de chiffrement et de stockage des données codées dans ladite mémoire externe (4) ;
des moyens (14) pour générer une seconde clé de chiffrement sur la base desdites informations biologiques en réponse à une commande de reproduction de contenu ; et
des moyens (13) pour décoder lesdites données de contenus stockées dans ladite mémoire externe (4) en utilisant ladite seconde clé de chiffrement ;
**caractérisé en ce que**
ledit terminal de communication mobile (1) comprend en outre :
des moyens pour stocker un historique de connexions indiquant si le terminal de communication mobile (1) se connecte audit réseau de communication ou non ; et
des moyens pour reproduire (15) lesdites données de contenus selon ledit historique de connexions en réponse à ladite commande de reproduction de contenu.

2. Système d'utilisation de données de contenus selon la revendication 1, dans lequel ledit historique de connexions indique si le terminal de communication mobile (4) se connecte audit réseau de communication ou non pendant une période prédéterminée.

3. Système d'utilisation de données de contenus selon la revendication 1 ou la revendication 2, dans lequel ledit terminal de communication mobile (1) comprenant en outre une mémoire interne (12) destinée à stocker l'historique de connexions.

4. Système d'utilisation de données de contenus selon l'une quelconque des revendications 1 à 3, dans lequel ledit terminal de communication mobile (1) comprend en outre une mémoire interne (12) destinée à stocker les données de contenus téléchargées, et comprend en outre des moyens pour supprimer les données de contenus stockées dans la mémoire interne (12) après que les données de contenus aient été codées et stockées dans la mémoire externe (4).

5. Procédé d'utilisation de données de contenus consistant à télécharger des données de contenus via un réseau de communication afin de stocker les données de contenus dans une mémoire externe (4) d'un terminal de communication mobile (1), comprenant : au niveau dudit terminal de communication mobile (1),
une étape de génération (S4) d'une première clé de chiffrement sur la base d'informations biologiques capables d'identifier un utilisateur dudit terminal (1) en réponse à une commande de téléchargement ;
une étape de codage desdites données de contenus avec ladite première clé de chiffrement et de stockage (S5) des données codées dans ladite mémoire externe (4) ;
une étape de génération (S12, S22) d'une seconde clé de chiffrement sur la base desdites informations biologiques en réponse à une commande de reproduction de contenu ; et
une étape de décodage (S15, S26) desdites données de contenus stockées dans ladite mémoire externe (4) en utilisant ladite seconde clé de chiffrement ;
**caractérisé en ce que**
ledit procédé comprend en outre, au niveau dudit terminal de communication mobile (1),
une étape de stockage d'un historique de connexions indiquant si le terminal de communication mobile (1) se connecte ou non audit réseau de communication ; et
une étape de reproduction (S16, S27) desdites données de contenus selon ledit historique de connexions en réponse à ladite commande de reproduction de contenu.

6. Procédé d'utilisation de données de contenus selon la revendication 5, dans lequel ledit historique de connexions indique (S25) si le terminal de communication mobile (4) se connecte ou non audit réseau de communication pendant une période prédéterminée.

7. Procédé d'utilisation de données de contenus selon la revendication 5 ou la revendication 6, comprenant en outre une étape de stockage de l'historique de connexions dans une mémoire interne (12) du terminal de communication mobile (1).

8. Procédé d'utilisation de données de contenus selon l'une quelconque des revendications 5 à 7, comprenant en outre une étape de stockage des données de contenus téléchargées dans une mémoire interne (12) du terminal de communication mobile, et une étape de suppression des données de contenus stockées dans la mémoire interne (12) après que les données de contenus aient été codées et stockées dans la mémoire externe (4).

9. Terminal de communication mobile (1) destiné à télécharger des données de contenus via un réseau de communication afin de stocker les données de contenus dans une mémoire externe (4) de celui-ci, comprenant :
des moyens (13) pour générer une première clé de chiffrement sur la base d'informations biologiques capables d'identifier un utilisateur dudit terminal (1) en réponse à une commande de téléchargement ; et
des moyens (14) pour coder lesdites données de contenus avec ladite première clé de chiffrement et de stockage des données codées dans ladite mémoire externe (4) ;
des moyens (13) pour générer une seconde clé de chiffrement sur la base desdites informations biologiques en réponse à une commande de reproduction de contenu ; et
des moyens (14) pour décoder lesdites données de contenus stockées dans ladite mémoire externe (4) en utilisant ladite seconde clé de chiffrement ;
**caractérisé en ce que**
ledit terminal de communication mobile (1) comprend en outre,
des moyens pour stocker un historique de connexions indiquant si le terminal de communication mobile (1) se connecte ou non audit réseau de communication ; et
des moyens (15) pour reproduire lesdites données de contenus selon ledit historique de connexions en réponse à ladite commande de reproduction de contenu.

10. Terminal de communication mobile (1) selon la revendication 9, dans lequel ledit historique de connexions indique si le terminal de communication mobile (1) se connecte ou non audit réseau de communication pendant une période prédéterminée.

11. Terminal de communication mobile (1) selon la revendication 9 ou la revendication 10, comprenant en outre une mémoire interne (12) destinée à stocker l'historique de connexions.

12. Terminal de communication mobile (1) selon l'une quelconque des revendications 9 à 11, comprenant en outre une mémoire interne (12) destinée à stocker les données de contenus téléchargées, et comprenant en outre des moyens pour supprimer des données de contenus stockées dans la mémoire interne (12) après que les données de contenus aient été codées et stockées dans la mémoire externe (4).

13. Programme ayant un moyen de code destiné à ce qu'un ordinateur, lorsqu'il exécute le programme, effectue les étapes du procédé selon l'une quelconque des revendications 5 à 8.
